# EUROPÄISCHE PATENTSCHRIFT

(11) **EP 3 638 524 B1**
(45) Veröffentlichungstag und Bekanntmachung des Hinweises auf die Patenterteilung: **08.09.2021**
(21) Anmeldenummer: 18730332.6
(22) Anmeldetag: 07.06.2018
(51) Int. Cl.: B60J 10/20, B60J 10/36, B60J 10/74

(54) **DICHTUNGSANORDNUNG ZUR FÜHRUNG UND ABDICHTUNG EINER VERTIKAL BEWEGBAREN FAHRZEUGFENSTERSCHEIBE**
SEALING ARRANGEMENT FOR GUIDING AND SEALING A VERTICAL MOVABLE VEHICLE WINDOW PANE
DISPOSITIF D'ÉTANCHÉITÉ POUR GUIDER ET SCELLER UNE VITRE DE VÉHICULE MOBILE VERTICALEMENT

(30) Priorität: 12.06.2017 DE 102017112840; 27.04.2018 DE 102018110218
(43) Veröffentlichungstag der Anmeldung: 22.04.2020
(73) Patentinhaber: CQLT SaarGummi Technologies S.à.r.l., 5544 Remich (LU)
(72) Erfinder: GRÜTER, Achim, 66780 Rehlingen-Siersburg (DE); LAUX, Timo, 66809 Nalbach (DE)
(74) Vertreter: Patentanwälte Bernhardt / Wolff Partnerschaft mbB
(86) Internationale Anmeldenummer: PCT/EP2018/065018
(87) Internationale Veröffentlichungsnummer: WO 2018/228913

(56) Entgegenhaltungen:
- WO-A1-01/42036
- DE-A1-102013 108 304
- DE-A1-102015 207 817
- DE-U1- 20 104 747
- GB-A- 2 393 752
- JP-A- 2003 136 969
- US-A- 5 740 640
- US-A1- 2012 151 842

## Beschreibung

Die Erfindung betrifft eine Dichtungsanordnung zur Führung und Abdichtung einer vertikal bewegbaren Fahrzeugfensterscheibe, mit mehreren form- oder/und kraftschlüssig miteinander und mit der Fahrzeugkarosserie verbindbaren Strangkomponenten, wobei die Strangkomponenten eine Strangkomponente aus Kunststoff umfassen, die sich bei geschlossenem Fahrzeugfenster entlang einem oberen Rand der Fahrzeugfensterscheibe erstreckt.

Eine Dichtungsanordnung mit diesen Merkmalen geht aus der DE 100 63 459 A1 und DE 10 2013 108 304 A1 hervor. Eine mit Dichtungsstrangkomponenten verbindbare Kunststoffstrangkomponente dient u.a. als Verblendleiste. Aus DE 201 04 747 U1 und JP 2003136969 A gehen Dichtungsanordnungen für einen Spalt zwischen einer Tür oder eines Klappe eines Kraftfahrzeugs und einem Rand der zu verschließenden Öffnung hervor. Aus WO 01/42036 A1 ist eine Dichtungsanordnung zur Abdichtung und Befestigung eines unbeweglichen Fenster, insbesondere einer Windschutzscheibe, an der Karosserie eines Kraftfahrzeugs bekannt.

Durch die vorliegende Erfindung wird eine neue Dichtungsanordnung der eingangs genannten Art geschaffen, die dadurch gekennzeichnet ist, dass die Strangkomponente aus Kunststoff Anschlagmittel zur Arretierung der Kunststoffstrangkomponente in Stranglängsrichtung bei der Montage der Dichtungsanordnung an der Fahrzeugkarosserie aufweist. Zudem ist die Strangkomponente aus Kunststoff mit sich entlang dieser Komponente erstreckenden, Elastomermaterial aufweisenden Dichtungsstrangkomponenten verbindbar. Vorzugsweise sind Steckverbindungen vorgesehen, ggf. einrastende Steckverbindungen.

Zusätzlich weist wenigstens eine der sich entlang der Kunststoffstrangkomponente erstreckenden Dichtungsstrangkomponenten Anschlagmittel zur Arretierung der Dichtungsstrangkomponente in Stranglängsrichtung an der Kunststoffstrangkomponente auf.

Bei einer Vormontage der Dichtungsstrangkomponente an der Kunststoffstrangkomponente vor deren Platzierung an der Fahrzeugkarosserie kann so die Dichtungsstrangkomponente auf der Kunststoffstrangkomponente exakt positioniert werden. Nach Montage der so vorgefertigten Baugruppe an der Fahrzeugkarosserie ist dann nicht nur die Kunststoffstrangkomponente sondern auch die Dichtungsstrangkomponente exakt an der gewünschten Stelle an der Fahrzeugkarosserie platziert.

Eine solche Kunststoffstrangkomponente nach der Erfindung erleichtert erheblich die Montage der Dichtungsanordnung an der Fahrzeugkarosserie, indem sie als Träger weiterer Komponenten der Anordnung für eine genaue Platzierung dieser Komponenten am Fahrzeug dienen kann.

Während als Anschlagmittel eine Vertiefung in der Kunststoffstrangkomponente denkbar wäre, in die ein Karosserievorsprung eingreift, ist in einer bevorzugten Ausführungsform der Erfindung zumindest ein von einer Längsseite der Kunststoffstrangkomponente quer zur Stranglängsrichtung vorstehendes Zapfenelement für den Eingriff in eine Öffnung in der Fahrzeugkarosserie vorgesehen. Gegebenenfalls rastet das Zapfenelement in der Öffnung ein.

Wie bei dem Anschlagmittel der Kunststoffstrangkomponente kann es sich bei dem Anschlagmittel der Dichtungsstrangkomponente um ein quer zur Stranglängsrichtung vorstehendes Zapfenelement handeln, hier für den Eingriff in eine Steckeröffnung an der Kunststoffstrangkomponente.

In einer weiteren Ausführungsform der Erfindung umfassen die sich entlang der Kunststoffstrangkomponente erstreckenden Dichtungsstrangkomponenten eine erste Komponente zur Abdichtung der Fahrzeugfensterscheibe auf der Außenseite und eine zweite Komponente zur Abdichtung der Fahrzeugfensterscheibe an der Innenseite.

Dabei kann die erste Komponente ferner zur Abdichtung einer die Fahrzeugfensterscheibe aufweisenden Fahrzeugtür gegen den Türrahmen vorgesehen sein.

In einer besonders bevorzugten Ausführungsform der Erfindung ist die Strangkomponente aus Kunststoff ferner mit einer B-Säulenverblendung verbindbar, die an die Kunststoffstrangkomponente quer zur Stranglängsrichtung ansteckbar ist, insbesondere einrastend ansteckbar.

In einer weiteren besonders bevorzugten Ausführungsform der Erfindung ist die Strangkomponente aus Kunststoff ferner mit einem zur Montage an einer A-Säule oder C-Säule vorgesehenen Bauteil, insbesondere einem umspritzten Dreieckfenster, verbindbar.

Die B-Säulenverblendung oder das Bauteil weisen vorzugsweise Einrichtungen zur Halterung und Führung vertikal verlaufender Dichtungsstrangkomponenten auf.

Zweckmäßig ist ein vertikal verlaufender Abschnitt der die Fahrzeugfensterscheibe auf der Innenseite abdichtenden zweiten Komponente durch die Halterungs- und Führungseinrichtungen der B-Säulenverkleidung gehalten und geführt.

Der genannte Abschnitt der zweiten Komponente kann mit einem Steckerteil in eine Steckeraufnahme an der B-Säulenverkleidung längsseitig einsteckbar sein und insbesondere dort einrasten.

Die Halte- und Führungseinrichtungen der B-Säulenverkleidung weisen zweckmäßig einen Aufnahmeschacht für eine vertikal verlaufende Dichtungsstrangkomponente zur Abdichtung der Fahrzeugfensterscheibe auf der Außenseite auf.

In einer weiteren Ausführungsform der Erfindung umfasst das bei der A- oder C-Säule angeordnete Bauteil eine U-Profilschiene zur Aufnahme einer U-förmigen Dichtungsstrangkomponente sowohl zur innen- als auch außenseitigen Abdichtung der Fahrzeugfensterscheibe.

Die aus mehreren Komponenten zusammensetzbare Dichtungsanordnung nach der Erfindung ermöglicht eine Vielzahl von Varianten, wobei Unterschiede, z.B. Farbunterschiede, zwischen den Varianten vorteilhaft auf einzelne Komponenten beschränkt und die übrigen Komponenten unverändert bleiben können.
Die erfindungsgemäße Strangkomponente aus Kunststoff, der vor allem eine Träger- und Verbindungsfunktion zukommt, kann als einziger Bestandteil der Dichtungsanordnung an unterschiedliche Karosseriegeometrien, d.h. unterschiedliche Fahrzeugtypen, angepasst sein, wobei für die übrigen Komponenten vorteilhaft bei allen Fahrzeugtypen die gleichen Standardprofile, z.B. aus EPDM, zum Einsatz kommen können.
Ferner erlauben es mehrkomponentige Dichtungsanordnungen Bearbeitungsprozesse, welche die Dichtungsanordnung in ihrer Gesamtheit beeinträchtigen würden, vorteilhaft auf einzelne Komponenten zu beschränken, z.B. Lackierungen oder Beflockungen.
Ein weiterer Vorteil mehrkomponentiger Dichtungsanordnungen besteht darin, dass die Komplexität der Profile der einzelnen Komponenten klein sein und diese Komponenten als Doppelstrang extrudiert werden können, wobei gleichzeitig Dichtungsprofile für die rechte und linke Seite des Fahrzeugs gebildet werden. Schließlich erlauben mehrkomponentige Dichtungsanordnungen den Einsatz für die einzelnen Komponenten optimierter Materialien.

Die Erfindung ist nachfolgend anhand von Ausführungsbeispielen und der beiliegenden, sich auf diese Ausführungsbeispiele beziehenden Zeichnungen weiter erläutert. Es zeigen:

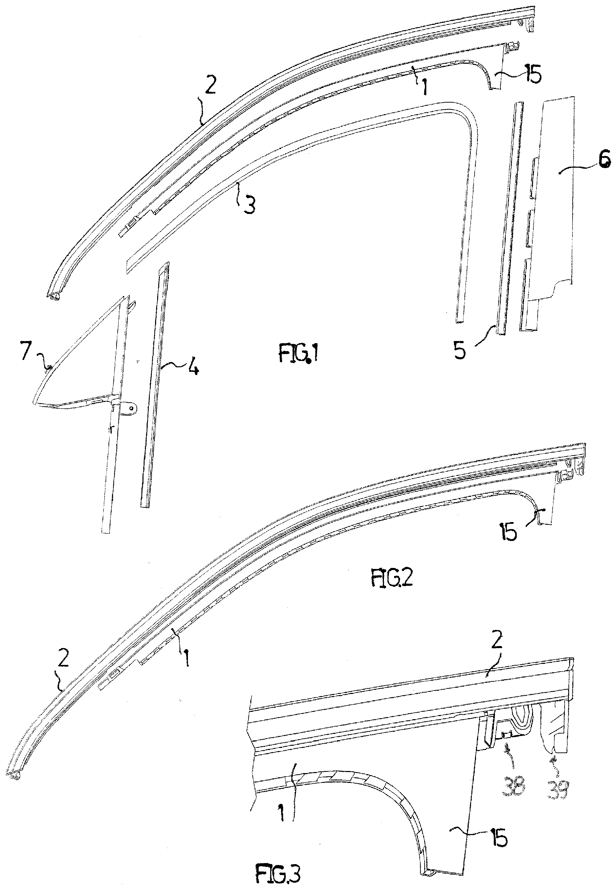

- Fig. 1: ein erstes Ausführungsbeispiel einer erfindungsgemäßen Dichtungsanordnung für eine vordere Fahrzeugtür in Explosionsdarstellung,
- Fig. 2: eine an einer Kunststoffstrangkomponente der Anordnung von Fig. 1 vormontierte Dichtungsstrangkomponente der Anordnung von Fig. 1,
- Fig. 3: ein Detail der Ansicht von Fig. 2,
- Fig. 4: eine die Montage der Dichtungsanordnung von Fig. 1 an einer Fahrzeugtür erläuternde Darstellung,
- Fig. 5: Ansichten einer B-Säulenverkleidung und einer durch die Verkleidung gehaltenen vertikal verlaufenden Dichtungsstrangkomponente,

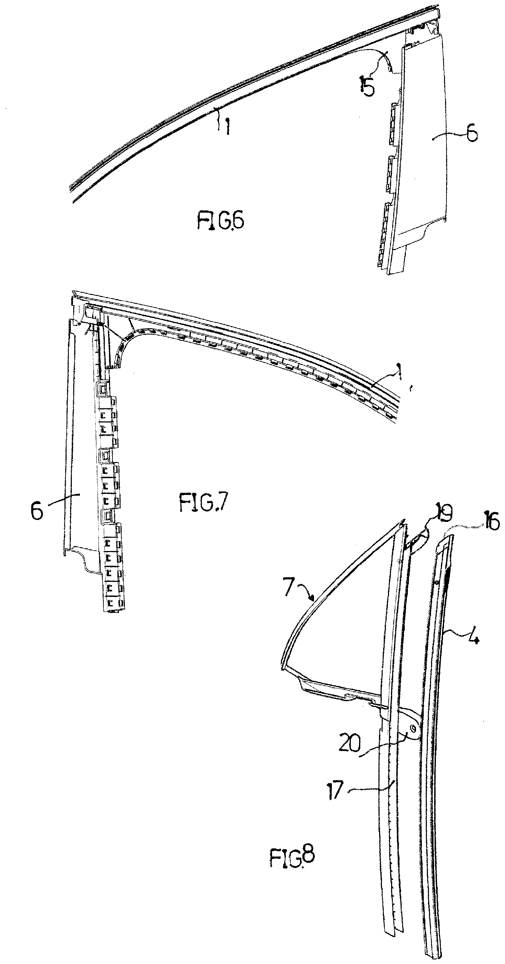

- Fig. 6 und 7: die Montage einer B-Säulenverkleidung an einer Kunststoffstrangkomponente erläuternde Darstellungen,
- Fig. 8: eine die Montage eines vertikalen Dichtungsstrangelements an einem eine Dreieckscheibe umfassenden Bauteil erläuternde Darstellung,

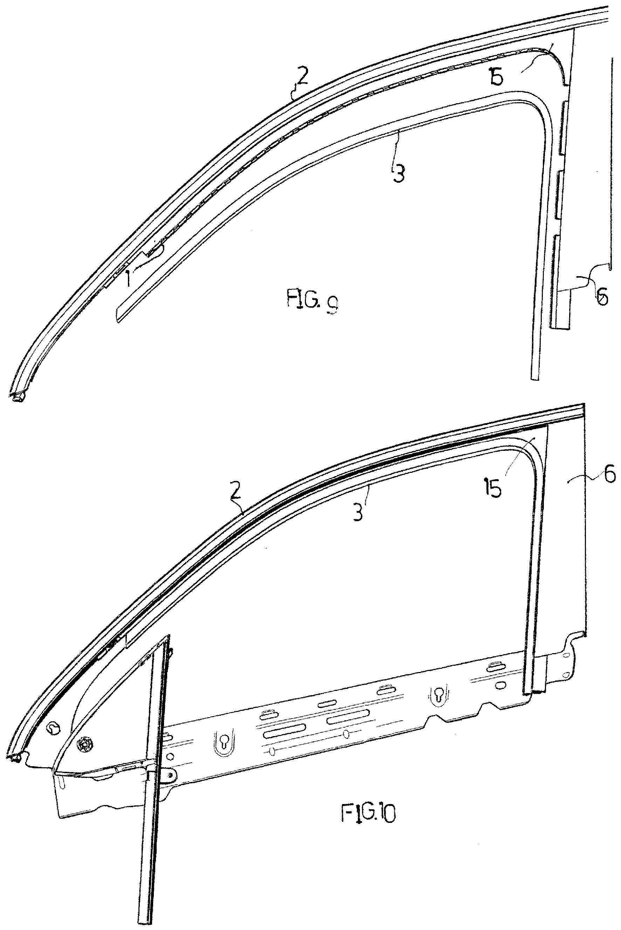

- Fig. 9 und 10: die Montage einer weiteren Dichtungsstrangkomponente erläuternde Darstellungen,
- Fig. 11: eine die Abdichtung durch die Dichtungsanordnung am oberen Scheibenrand einer Fahrzeugfensterscheibe erläuternde Querschnittsdarstellung,
- Fig. 12: eine die Abdichtung einer Fahrzeugfensterscheibe am vorderen Scheibenrand durch die Dichtungsanordnung erläuternde Querschnittsdarstellung,
- Fig. 13: eine die Abdichtung einer Fahrzeugfensterscheibe am hinteren Scheibenrand durch die erfindungsgemäße Dichtungsanordnung erläuternde Querschnittsdarstellung, und
- Fig. 14: ein weiteres Ausführungsbeispiel für eine Dichtungsanordnung nach der Erfindung an einer hinteren Fahrzeugtür in Explosionsdarstellung.

Eine mehrere Strangkomponenten aufweisende Dichtungsanordnung zur Führung und Abdichtung einer vertikal bewegbaren Fahrzeugfensterscheibe in einer Vordertür des Fahrzeugs umfasst eine Strangkomponente 1 aus einem Kunststoff, z.B. Polypropylen oder Polyamid, ggf. glasfaserverstärkt, sowie Strangkomponenten 2 bis 4 aus einem Elastomermaterial, z.B. EPDM. Die Kunststoffstrangkomponente 1 ist mit einer B-Säulenverkleidung 6 und einem Bauteil 7 in Form einer umspritzten Dreieckscheibe verbindbar. Anstelle der umspritzten Dreieckscheibe käme als Bauteil 7 auch eine Verblendung oder Außenspiegeleinheit in Betracht.

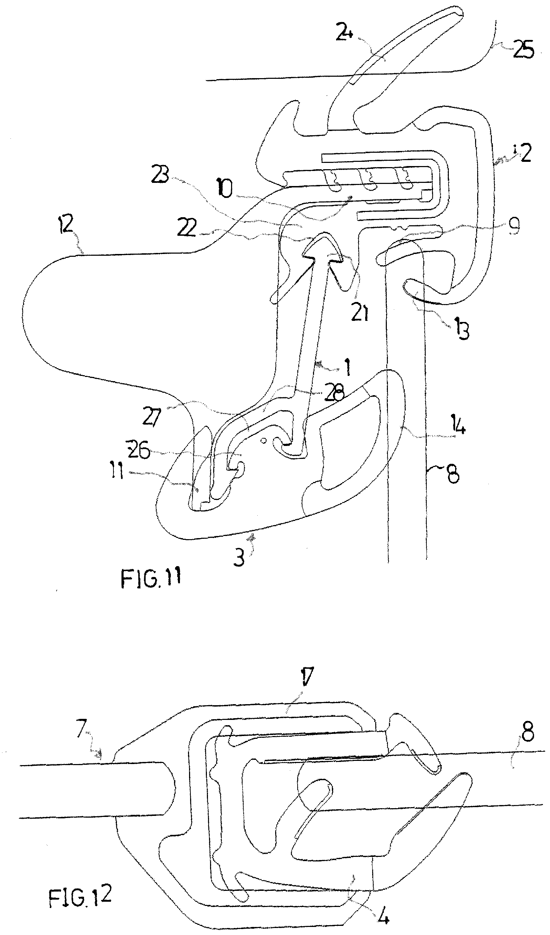

Bei geschlossenem Fahrzeugfenster 8 erstrecken sich die Strangkomponenten 1 und 2 sowie teilweise auch die Strangkomponente 3 entlang einem oberen Rand 9, der (in Fig. 11 gezeigten) Fahrzeugfensterscheibe 8. Wie Fig. 11 ferner erkennen lässt, sind die Dichtungsstrangkomponenten 2 und 3 jeweils über einen Flansch 10 bzw. 11 mit einem Türfensterrahmen 12 einer Fahrzeugtür und untereinander über die Kunststoffstrangkomponente 1 verbunden. Die Dichtungsstrangkomponente 2 dichtet bei geschlossenem Fahrzeugfenster die Fensterscheibe 8 außenseitig am oberen Rand 9 durch zwei Dichtlippen 13 ab. Ein schlauchförmiger Dichtungsabschnitt 14 der Dichtungsstrangkomponente 3 dient der Abdichtung auf der Scheibeninnenseite.

Während die Dichtungsstrangkomponente 3 an einem Ansatz 15 der Kunststoffstrangkomponente 1 abgebogen und vertikal nach unten weitergeführt ist, übernimmt eine ausschließlich vertikal verlaufende Dichtungsstrangkomponente 5 die Abdichtung der Fahrzeugfensterscheibe 8 auf deren Außenscheibe. Sowohl der vertikal verlaufende Abschnitt der Dichtungsstrangkomponente 3 als auch die Dichtungsstrangkomponente 5 sind mit der B-Säulenverblendung 6 verbunden, die ihrerseits in Verbindung mit der Kunststoffstrangkomponente 1 steht. Die Dichtungsstrangkomponente 5 stößt mit einer Stirnfläche 16 gegen eine Längsseite der Dichtungsstrangkomponente 2 an.

Die dem Bauteil 7 zugewandte Dichtungsstrangkomponente 4 weist einen U-förmigen Querschnitt auf und dichtet über ihre beiden U-Schenkel die Fahrzeugfensterscheibe 8 nahe ihrem in Fahrtrichtung vorderen vertikalen Rand sowohl auf der Scheibeninnen- als auch Scheibenaußenseite ab.

Die Dichtungsstrangkomponente 4 ist in einem mit der Dreieckscheibe des Bauteils 7 verbundenen U-Profil 17 gehalten und stößt mit einer abgeschrägten Stirnfläche 18 gegen die Dichtungsstrangkomponente 3 an. Das U-Profil 17 ist über Verbindungslaschen 19 und 20 mit der Kunststoffstrangkomponente 1 bzw. der Fahrzeugtür innerhalb des Fensterschachts verbindbar. Sowohl die Dichtungsstrangkomponente 4 als auch die Dichtungsstrangkomponenten 3 und 5 ragen in den Fensterschacht der Fahrzeugtür hinein.

Wie Fig. 11 erkennen lässt, ist die Kunststoffstrangkomponente 1 längsseitig auf die Dichtungsstrangkomponente 2 aufsteckbar, wobei ein hinterschnittener Steckerzapfen 21 der Kunststoffstrangkomponente 1 einrastend in eine Steckervertiefung 22 eingreift, die in einem Schenkel 23 eines U-förmigen Befestigungsabschnitts der Dichtungsstrangkomponente 2 gebildet ist. Eine mit dem anderen U-Schenkel verbundene Dichtlippe 24 dient zusätzlich zur Abdichtung des Türspalts gegen den Türrahmen der Fahrzeugkarosserie 25.

Der Verbindung der Kunststoffstrangkomponente 1 mit der Dichtungsstrangkomponente 3 dient ein im Querschnitt pilzförmiges, hinterschnittenes Steckerelement 26. Eine Steckeröffnung 27, in welcher das Steckelement 26 einrastet, ist durch ein Fußteil 28 der Kunststoffstrangkomponente 1 gebildet. Eine Lippe 33 der Dichtungsstrangkomponente 3 hintergreift den Flansch 10 am Türfensterrahmen 12.

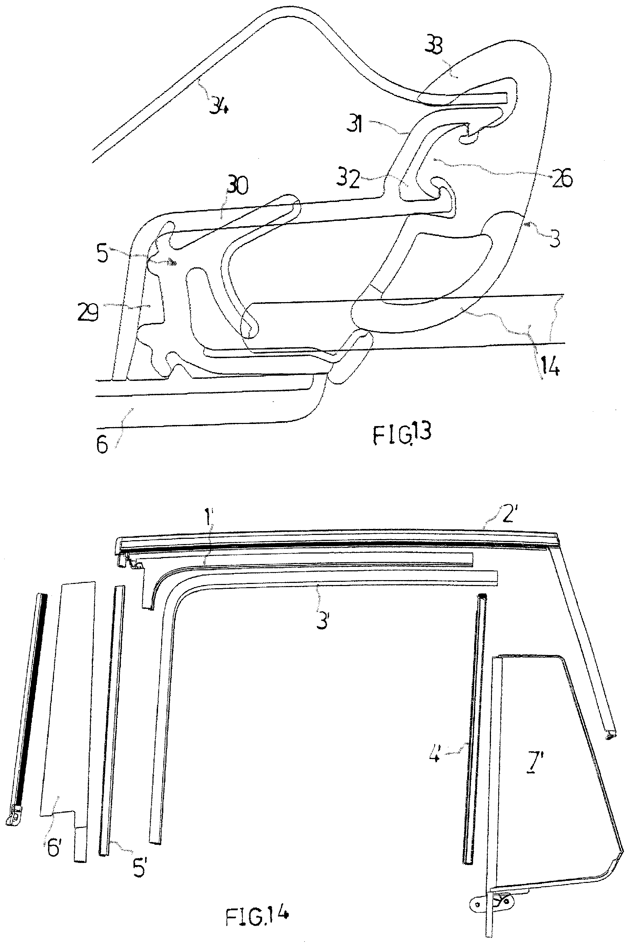

Wie Fig. 13 erkennen lässt, ist die einen U-förmigen Querschnitt aufweisende Dichtungsstrangkomponente 5 in einem Schacht 29 verklemmbar, der durch einen gewinkelten Ansatz 30 an der B-Säulenverblendung 6 gebildet ist. Der gewinkelte Ansatz 30 umfasst einen Fußteil 31 zur Bildung einer Steckeröffnung 32, in welche das pilzförmige Steckerelement 26 der durchgehend verlegten Dichtungsstrangkomponente 3 einrastend einsteckbar ist. Die Lippe 33 der Dichtungsstrangkomponente 3 hintergreift ein Karosserieblech 34 der Fahrzeugtür.

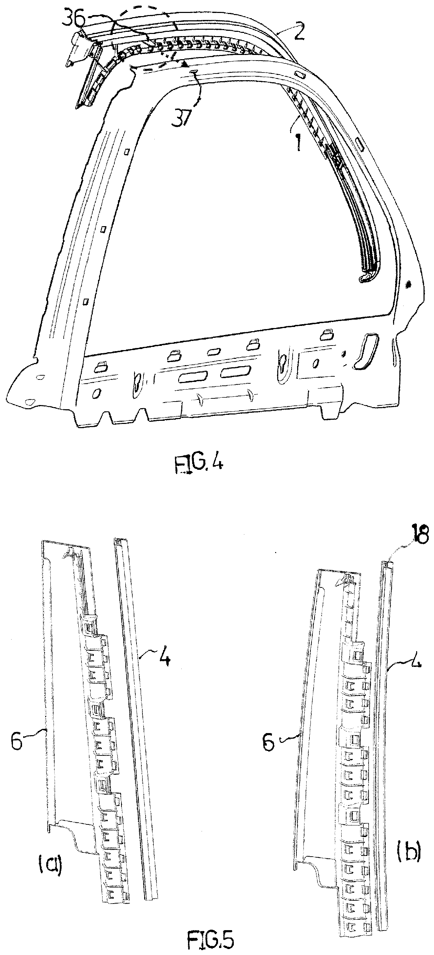

Zweckmäßig werden vor einer Montage des vorangehend beschriebenen Dichtungsanordnung an einer Fahrzeugtür die Kunststoffstrangkomponente 1 und die Dichtungsstrangkomponente 2 miteinander verbunden, wobei die Einhaltung einer gewünschten Längsposition der Dichtungsstrangkomponente 2 auf der Kunststoffstrangkomponente 1 durch einen von der Dichtungsstrangkomponente 2 vorstehende Steckerzapfen 34, der in eine entsprechende Steckeröffnung 35 an der Kunststoffstrangkomponente 1 eingreift, gesichert wird. Die so vorgefertigte Baugruppe kann in ihrer Gesamtheit montiert werden, wobei deren genaue Position an der Fahrzeugkarosserie durch einen von der Kunststoffstrangkomponente 1 quer zu deren Längsrichtung vorstehendes Zapfenelement 36 gesichert ist. Das in Fig. 4 gezeigte Zapfenelement 36 greift in eine Öffnung 37 im Karosserieblech des Fahrzeugtürrahmens ein.

Durch das Zapfenelement 36 sind Steckerelemente 38 für eine Steckverbindung der Kunststoffstrangkomponente 1 mit der B-Säulenverkleidung 7 genau positioniert, so dass sich auch die B-Säulenverkleidung in der gewünschten Position befindet. Die
B-Säulenverkleidung 6 könnte auch vor der Montage einer diese umfassenden Baugruppe mit der Kunststoffstrangkomponente 1 verbunden werden. Bei dieser Verbindung greift ferner ein Steckzapfen 39 der Dichtungsstrangkomponente 2 in eine entsprechende, an der B-Säulenverblendung vorgesehene Öffnung ein. Es versteht sich, dass entsprechende Steckeröffnungen unsichtbar auf der Innenseite der B-Säulenverkleidung angeordnet sind.

Vor oder nach den vorangehend beschriebenen Montageschritten erfolgt die Montage des Bauteils 7 an der Fahrzeugtür. Abschließend werden die Dichtungsstrangkomponenten 3,4 und 5 montiert, wobei die Dichtungsstrangkomponente 3 mit dem pilzförmigen Steckerzapfen 21 in die Steckeröffnungen 27 und 32 eingedrückt wird und die Dichtungsstrangkomponenten 4 und 5 in ihre rillenförmigen Aufnahmesitze eingedrückt und verklemmt werden.

Fig. 14 zeigt eine entsprechende, aus mehreren Strangkomponenten zusammengesetzte Dichtungsanordnung für eine hintere Fahrzeugtür. Die Anordnung umfasst eine Kunststoffstrangkomponente 1', eine Dichtungsstrangkomponente 2' zur Abdichtung der Fahrzeugscheibe auf der Außenseite, eine Dichtungsstrangkomponente 3' zur Abdichtung der Fahrzeugfensterscheibe auf der Innenseite, eine zur Abdichtung der Fahrzeugfensterscheibe auf beiden Seiten vorgesehene vertikalen Dichtungsstrangkomponente 4, die einer C-Säule zugewandt ist, und einer Dichtungsstrangkomponente 5', die einer B-Säule zugewandt ist. Die Dichtungsstrangkomponente 5' und ein abgebogener Teil der Dichtungsstrangkomponente 3' sind mit der B-Säulenverblendung 6' verbindbar. Die Dichtungsstrangkomponente 4' kann mit einem
U-Profil eines Bauteils 7' in Form einer umspritzten Fensterscheibe an der C-Säule verbunden werden. Wie die Kunststoffstrangkomponente 1 weist auch die Kunststoffstrangkomponente 1' einen vorstehendes Zapfenelement 7 (nicht gezeigt) auf, das in eine Öffnung im Karosserieblech der Fensterumrahmung einsteckbar ist und insbesondere in Fahrzeuglängsrichtung für eine genaue Positionierung der Kunststoffstrangkomponente 1 und damit der mit ihr verbundenen Komponenten sorgt.

## Patentansprüche

1. Dichtungsanordnung zur Führung und Abdichtung einer vertikal bewegbaren Fahrzeugfensterscheibe (8), mit mehreren, form- oder/und kraftschlüssig miteinander und mit der Fahrzeugkarosserie verbindbaren Strangkomponenten (1-5), wobei die Strangkomponenten (1-5) eine Strangkomponente (1) aus Kunststoff umfassen, die sich bei geschlossenem Fahrzeugfenster (8) entlang einem oberen Rand (9) der Fahrzeugfensterscheibe (8) erstreckt,
**dadurch gekennzeichnet,**
**dass** die Strangkomponente (1) aus Kunststoff Anschlagmittel (36) zur Arretierung der Kunststoffstrangkomponente (1) in Stranglängsrichtung bei der Montage der Dichtungsanordnung an der Fahrzeugkarosserie aufweist, die Strangkomponente (1) aus Kunststoff mit sich entlang dieser Komponente erstreckenden, Elastomermaterial aufweisenden Dichtungsstrangkomponenten (2,3) verbindbar ist und
wenigstens eine (2) der sich entlang der Kunststoffstrangkomponente (1) erstreckenden Dichtungsstrangkomponenten (2,3) Anschlagmittel zur Arretierung der Dichtungsstrangkomponente (2,3) in Stranglängsrichtung an der Kunststoffstrangkomponente (1) aufweist.

2. Dichtungsanordnung nach Anspruch 1,
**dadurch gekennzeichnet,**
**dass** die Anschlagmittel zumindest ein von einer Längsseite der Kunststoffstrangkomponente (1) quer zur Stranglängsrichtung vorstehendes Zapfenelement (36) für den Eingriff in eine Öffnung (37) in der Fahrzeugkarosserie umfassen, wobei das Zapfenelement (36) in der Öffnung (37) ggf. einrastet.

3. Dichtungsanordnung nach Anspruch 1 oder 2,
**dadurch gekennzeichnet,**
**dass** die Strangkomponente (1) mit den Elastomermaterial aufweisenden Dichtungsstrangkomponenten (2,3) durch Steckverbindungen, ggf. einrastende Steckverbindungen, verbindbar ist.

4. Dichtungsanordnung nach einem der Ansprüche 1 bis 3,
**dadurch gekennzeichnet,**
**dass** die Anschlagmittel ein quer zur Stranglängsrichtung vorstehendes Zapfenelement (36) für den Eingriff in eine Steckeröffnung (37) an der Kunststoffstrangkomponente (1) umfassen.

5. Dichtungsanordnung nach einem der Ansprüche 1 bis 4,
**dadurch gekennzeichnet,**
**dass** die sich entlang der Kunststoffstrangkomponente (1) erstreckenden Dichtungsstrangkomponenten (2,3) eine erste Komponente (2) zur Abdichtung der Fahrzeugfensterscheibe auf der Außenseite und eine zweite Komponente (3) zur Abdichtung der Fahrzeugfensterscheibe auf der Innenseite umfassen.

6. Dichtungsanordnung nach Anspruch 5,
**dadurch gekennzeichnet,**
**dass** die erste Komponente (2) ferner zur Abdichtung einer die Fahrzeugfensterscheibe (8) aufweisenden Fahrzeugtür gegen den Türrahmen (25) vorgesehen ist.

7. Dichtungsanordnung nach Anspruch 5 oder 6,
**dadurch gekennzeichnet,**
**dass** die mit der Kunststoffstrangkomponente (1) verbindbaren ersten und zweiten Komponenten (2,3) ferner zueinander im Abstand jeweils mit Fensterrahmenschenkeln einer Fahrzeugtür verbindbar sind.

8. Dichtungsanordnung nach einem der Ansprüche 1 bis 7,
**dadurch gekennzeichnet,**
**dass** die Strangkomponente (1) aus Kunststoff ferner mit einer B-Säulenverblendung (6) verbindbar ist, die an die Kunststoffstrangkomponente (1) quer zur Stranglängsrichtung ansteckbar ist, insbesondere einrastend ansteckbar.

9. Dichtungsanordnung nach einem der Ansprüche 1 bis 8,
**dadurch gekennzeichnet,**
**dass** die Strangkomponente (1) aus Kunststoff ferner mit einem zur Montage an einer A-Säule oder C-Säule vorgesehenen Bauteil (7), insbesondere einem umspritzten Dreieckfenster, verbindbar ist.

10. Dichtungsanordnung nach Anspruch 8 oder 9,
**dadurch gekennzeichnet,**
**dass** die B-Säulenverblendung (6) oder das Bauteil (7) mit Einrichtungen zur Halterung und Führung einer vertikal verlaufenden Dichtungsstrangkomponente (3,4,5) aufweist.

11. Dichtungsanordnung nach Anspruch 10,
**dadurch gekennzeichnet,**
**dass** ein vertikal verlaufender Abschnitt der die Fahrzeugfensterscheibe (8) auf der Innenseite abdichtenden zweiten Komponente (3) durch die Halterungs- und Führungseinrichtungen der B-Säulenverkleidung (6) gehalten ist.

12. Dichtungsanordnung nach Anspruch 11,
**dadurch gekennzeichnet,**
**dass** der Abschnitt der zweiten Komponente mit einem Steckerteil (26) in eine Steckeraufnahme (32) an der B-Säulenverkleidung (6) einsteckbar ist.

13. Dichtungsanordnung nach einem der Ansprüche 10 bis 12,
**dadurch gekennzeichnet,**
**dass** die Halte- und Führungseinrichtungen der B-Säulenverkleidung (6) einen Aufnahmeschacht (29) für eine vertikal verlaufende Dichtungsstrangkomponente (5) zur Abdichtung der Fahrzeugfensterscheibe (8) auf der Außenseite aufweisen.

14. Dichtungsanordnung nach einem der Ansprüche 9 bis 13,
**dadurch gekennzeichnet,**
**dass** das Bauteil (7) eine U-Profilschiene (17) zur Aufnahme einer U-förmigen Dichtungsstrangkomponente (4) zur innen- und außenseitigen Abdichtung der Fahrzeugfensterscheibe (8) umfassen.

## Claims

1. Seal arrangement for guiding and sealing a vertically movable vehicle window pane (8), having multiple strand components (1-5) which are able to be connected in a form- and/or force-fitting manner to one another and to the vehicle body, wherein the strand components (1-5) comprise a strand component (1) composed of plastic which, when the vehicle window (8) is closed, extends along an upper edge (9) of the vehicle window pane (8),
**characterized**
**in that** the strand component (1) composed of plastic has stop means (36) for locking the plastic strand component (1) in a strand longitudinal direction during the fitting of the seal arrangement to the vehicle body, the strand component (1) composed of plastic is able to be connected to seal strand components (2, 3) extending along said component and comprising elastomer material, and
at least one (2) of the seal strand components (2, 3) extending along the plastic strand component (1) has stop means for locking the seal strand component (2, 3) to the plastic strand component (1) in a strand longitudinal direction.

2. Seal arrangement according to Claim 1,
**characterized**
**in that** the stop means comprise at least one pin element (36), projecting from a longitudinal side of the plastic strand component (1) transversely with respect to the strand longitudinal direction, for engagement into an opening (37) in the vehicle body, wherein the pin element (36) possibly latches into the opening (37).

3. Seal arrangement according to Claim 1 or 2,
**characterized**
**in that** the strand component (1) is able to be connected to the seal strand components (2, 3) comprising elastomer material by way of plug-in connections, possibly latching-in plug-in connections.

4. Seal arrangement according to one of Claims 1 to 3,
**characterized**
**in that** the stop means comprise a pin element (36), projecting transversely with respect to the strand longitudinal direction, for engagement into a plug opening (37) at the plastic strand component (1).

5. Seal arrangement according to one of Claims 1 to 4,
**characterized**
**in that** seal strand components (2, 3) extending along the plastic strand component (1) comprise a first component (2) for sealing the vehicle window pane on the outer side and a second component (3) for sealing the vehicle window pane on the inner side.

6. Seal arrangement according to Claim 5,
**characterized**
**in that** the first component (2) is furthermore provided for sealing with respect to the door frame (25) a vehicle door which has the vehicle window pane (8).

7. Seal arrangement according to Claim 5 or 6,
**characterized**
**in that** the first and second components (2, 3), which are able to be connected to the plastic strand component (1), are furthermore each able to be connected, spaced apart from one another, to window frame limbs of a vehicle door.

8. Seal arrangement according to one of Claims 1 to 7,
**characterized**
**in that** the strand component (1) composed of plastic is furthermore able to be connected to a B pillar facing (6), which is able to be plugged onto, in particular is able to plugged with latching-in action onto, the plastic strand component (1) transversely with respect to the strand longitudinal direction.

9. Seal arrangement according to one of Claims 1 to 8,
**characterized**
**in that** the strand component (1) composed of plastic is furthermore able to be connected to a component (7), in particular an encapsulated triangular window, which is provided for being fitted to an A pillar or C pillar.

10. Seal arrangement according to Claim 8 or 9,
**characterized**
**in that** the B pillar facing (6) or the component (7) has with devices for holding and guiding a vertically extending seal strand component (3, 4, 5) .

11. Seal arrangement according to Claim 10,
**characterized**
**in that** a vertically extending portion of the second component (3), which seals the vehicle window pane (8) on the inner side, is held by the holding and guiding devices of the B pillar lining (6).

12. Seal arrangement according to Claim 11,
**characterized**
**in that** the portion of the second component is able to be plugged with a plug part (26) into a plug receptacle (32) at the B pillar lining (6).

13. Seal arrangement according to one of Claims 10 to 12,
**characterized**
**in that** the holding and guiding devices of the B pillar lining (6) have a receiving shaft (29) for a vertically extending seal strand component (5) for sealing the vehicle window pane (8) on the outer side.

14. Seal arrangement according to one of Claims 9 to 13,
**characterized**
**in that** the component (7) comprise a U-shaped profile rail (17) for receiving a U-shaped seal strand component (4) for the inner-side and outer-side sealing of the vehicle window pane (8).

## Revendications

1. Dispositif d'étanchéité pour le guidage et la fermeture étanche d'une vitre (8) verticalement mobile d'un véhicule, présentant plusieurs composants de brin (1-5) pouvant être reliés par complémentarité de forme et/ou à force les uns aux autres et à la carrosserie de véhicule, les composants de brin (1-5) comprenant un composant de brin (1) en matériau synthétique qui, lorsque la fenêtre (8) de véhicule est fermée, s'étend le long d'un bord supérieur (9) de la vitre (8) de véhicule, **caractérisé en ce que** le composant de brin (1) en matériau synthétique présente des moyens de butée (36) pour arrêter le composant de brin (1) en matériau synthétique dans la direction longitudinale du brin lors du montage du dispositif d'étanchéité au niveau de la carrosserie de véhicule, le composant de brin (1) en matériau synthétique pouvant être relié aux composants de brin (2, 3) d'étanchéité s'étendant le long de ce composant, présentant du matériau élastomère et au moins l'un des composants de brin (2, 3) étanchéité s'étendant le long du composant de brin (1) en matériau synthétique présente des moyens de butée pour arrêter le composant de brin (2, 3) d'étanchéité dans la direction longitudinale de brin au niveau du composant de brin (1) en matériau synthétique.

2. Dispositif d'étanchéité selon la revendication 1, **caractérisé en ce que** les moyens de butée comprennent au moins un élément d'ergot (36) faisant saillie d'un côté longitudinal du composant de brin (1) en matériau synthétique transversalement par rapport à la direction longitudinale du brin pour une prise dans une ouverture (37) dans la carrosserie de véhicule, l'élément d'ergot (36) s'encliquetant le cas échéant dans l'ouverture (37).

3. Dispositif d'étanchéité selon la revendication 1 ou 2, **caractérisé en ce que** le composant de brin (1) peut être relié par des raccords enfichables, le cas échéant des raccords enfichables par encliquetage, avec les composants de brin (2, 3) d'étanchéité présentant le matériau élastomère.

4. Dispositif d'étanchéité selon l'une quelconque des revendications 1 à 3, **caractérisé en ce que** les moyens de butée comprennent un élément d'ergot (36) en saillie transversalement par rapport à la direction longitudinale de brin pour une prise dans une ouverture d'enfichage (37) au niveau du composant de brin (1) en matériau synthétique.

5. Dispositif d'étanchéité selon l'une quelconque des revendications 1 à 4, **caractérisé en ce que** les composants de brin (2, 3) d'étanchéité s'étendant le long du composant de brin (1) en matériau synthétique comprennent un premier composant (2) pour la fermeture hermétique de la vitre de véhicule sur le côté externe et un deuxième composant (3) pour la fermeture hermétique de la vitre de véhicule sur le côté interne.

6. Dispositif d'étanchéité selon la revendication 5, **caractérisé en ce que** le premier composant (2) est en outre conçu pour la fermeture étanche d'une porte de véhicule présentant la vitre (8) de véhicule contre le cadre de porte (25).

7. Dispositif d'étanchéité selon la revendication 5 ou 6, **caractérisé en ce que** le premier et le deuxième composant (2, 3) pouvant être reliés aux composants de brin (1) en matériau synthétique peuvent en autre être reliés, à une certaine distance l'un de l'autre, respectivement aux ailes de cadre de fenêtre d'une porte de véhicule.

8. Dispositif d'étanchéité selon l'une quelconque des revendications 1 à 7, **caractérisé en ce que** le composant de brin (1) en matériau synthétique peut en outre être relié à un revêtement (6) de montant B qui peut être enfiché, en particulier enfiché par encliquetage, au niveau du composant de brin (1) en matériau synthétique transversalement à la direction longitudinale du brin.

9. Dispositif d'étanchéité selon l'une quelconque des revendications 1 à 8, **caractérisé en ce que** le composant de brin (1) en matériau synthétique peut en outre être relié à une pièce (7) destinée au montage sur un montant A ou un montant C, en particulier une fenêtre triangulaire surmoulée.

10. Dispositif d'étanchéité selon la revendication 8 ou 9, **caractérisé en ce que** le revêtement (6) de montant B ou la pièce (7) présente des dispositifs pour le maintien et le guidage d'un composant de brin (3, 4, 5) d'étanchéité s'étendant verticalement.

11. Dispositif d'étanchéité selon la revendication 10, **caractérisé en ce qu'**une section s'étendant verticalement du deuxième composant (3) fermant hermétiquement la vitre (8) de véhicule sur le côté interne est maintenue par les dispositifs de maintien et de guidage du revêtement (6) de montant B.

12. Dispositif d'étanchéité selon la revendication 11, **caractérisé en ce que** la section du deuxième composant peut être enfichée par une partie d'enfichage (26) dans un logement d'enfichage (32) au niveau du revêtement (6) de montant B.

13. Dispositif d'étanchéité selon l'une quelconque des revendications 10 à 12, **caractérisé en ce que** les dispositifs de maintien et de guidage du revêtement (6) de montant B présentent une gaine de réception (29) pour un composant de brin (5) d'étanchéité s'étendant verticalement en vue de la fermeture étanche de la vitre (8) de véhicule sur le côté externe.

14. Dispositif d'étanchéité selon l'une quelconque des revendications 9 à 13, **caractérisé en ce que** la pièce (7) comprend un rail profilé en U (17) pour loger un composant de brin (4) d'étanchéité en forme de U pour la fermeture étanche côté interne et côté externe de la vitre (8) de véhicule.
